# FASCICULE DE BREVET EUROPEEN

(11) **EP 1 621 805 B1**
(45) Date de publication et mention de la délivrance du brevet: **25.07.2007**
(21) Numéro de dépôt: 05300525.2
(22) Date de dépôt: 28.06.2005
(51) Int. Cl.: F16K 15/02, F01P 5/14

(54) **Dispositif de régulation thermique**
Thermische Regelvorrichtung
Heat control device

(30) Priorité: 27.07.2004 FR 0451666
(43) Date de publication de la demande: 01.02.2006
(73) Titulaire: Peugeot Citroën Automobiles S.A., 78140 Vélizy Villacoublay (FR)
(72) Inventeur: Dumoulin, Pierre, 92250 La Garenne-Colombes (FR); Le Lievre, Armel c/oPEUGEOT CITROEN AUTOMOBILES SA, 78360 Montesson (FR)
(74) Mandataire: Ménès, Catherine

(56) Documents cités:
- DE-A1- 4 319 380
- FR-A- 2 752 440
- US-A- 4 276 903
- US-A- 4 874 012
- US-A- 5 685 697

## Description

L'invention se rapporte à un dispositif de régulation hydraulique comprenant un clapet. Plus précisément, l'invention concerne un dispositif comprenant un circuit de liquide caloporteur comportant au moins deux échangeurs de chaleur, ce dispositif comportant, disposé entre les deux échangeurs, un clapet comprenant un corps destiné à être traversé par un fluide, deux orifices formant les entrées/sorties pour le fluide traversant le corps, un élément de régulation de débit mobile par rapport au corps entre deux positions de travail correspondant respectivement à un état du clapet dit "passant", dans lequel le fluide traverse le corps dans un premier sens avec un premier débit et un second état du clapet dit "résistif" dans lequel le fluide n'est pas admis à traverser le corps ou le traverse avec un second débit.

Un dispositif de ce type est par exemple connu du document DE4319380 qui décrit un moteur dont l'admission est assurée d'une part des gaz provenant d'un turbocompresseur et d'autre part par des gaz d'échappement recirculés, un diffuseur étant placé en aval de l'échangeur de refroidissement de l'air en sortie de compresseur, ce diffuseur étant muni d'un clapet pour limiter le débit de gaz recirculés dans les conditions défavorables de pression, sans pour autant stopper totalement cette recirculation.

Lorsque ce type de clapet est utilisé dans un circuit de régulation thermique/hydraulique, le clapet doit en général assurer un premier débit de fluide préconisé lorsqu'il est passant de façon à alimenter en fluide un organe hydraulique. Lorsque la situation de régulation l'exige, le clapet doit au contraire assurer un débit nul ou faible (état résistif).

Lorsque le circuit de régulation hydraulique est endommagé, la circulation ou la non-circulation du fluide vers certains organes thermiques (tels que des échangeurs) peut avoir des conséquences graves.

Des solutions connues consistent à détecter une anomalie dans le circuit de fluide en mesurant la température du fluide ou en vérifiant le bon fonctionnement de la pompe qui met en circulation le fluide dans le circuit.

Cependant ces solutions ne sont pas satisfaisantes. Dans certaines situations de fonctionnement, la mesure de la température du fluide n'est pas un indicateur fiable, et la détection du bon fonctionnement d'une pompe est malaisée et relativement coûteuse.

Il est connu, par exemple du document US-A-5,685,697, un clapet associé à un dispositif de freinage dont le corps est destiné à être traversé par un fluide, comportant deux orifices de sortie et une porte mobile par rapport au corps entre une position correspondant à un état dans lequel le fluide traverse le corps dans un premier sens, et un second état dans lequel le fluide n'est pas admis à traverser ; Le clapet comporte en outre des moyens de détection de la position de la porte.

Un but de la présente invention est de pallier tout ou partie des inconvénients de l'art antérieur relevés ci-dessus.

A cette fin, le dispositif de régulation thermique selon l'invention, par ailleurs conforme à la définition générique qu'en donne le préambule ci-dessus, est caractérisé en ce que le clapet comprend des moyens de détection de la position de l'élément de régulation par rapport au corps, de façon à déterminer le sens de circulation du fluide dans le clapet.

Par ailleurs, l'invention peut comporter l'une ou plusieurs des caractéristiques suivantes
- l'élément de régulation de débit est déplaçable par rapport au corps sous l'effet de la pression et/ou du flux de fluide,
- les moyens de détection comportent des moyens électriques,
- les moyens de détection comportent un contact électrique comprenant une partie fixe solidaire du corps et une partie mobile déplaçable avec l'élément de régulation de débit,
- le contact électrique comporte une pièce conductrice déformable solidaire du corps ou de l'élément de régulation de débit,
- le clapet comporte des moyens de rappel sollicitant l'élément de régulation de débit vers une des positions de travail,
- les moyens de rappel sont au moins partiellement conducteurs de l'électricité, et en ce que les moyens de détection comportent un contact électrique apte à transiter entre les moyens de rappel,
- l'élément de régulation de débit et le corps ont des formes conjuguées de façon que, dans l'état résistif, l'élément de régulation obstrue au moins partiellement un des orifices,
- l'élément de régulation comporte un orifice de fuite prévu pour assurer un débit traversant le corps quelle que soit la position de l'élément de régulation.

Selon une variante de l'invention, le premier échangeur de chaleur est disposé dans une première boucle de circulation du liquide caloporteur, le second échangeur de chaleur étant situé dans une seconde boucle raccordée à la première boucle

Selon une autre variante de réalisation, le circuit de liquide caloporteur est raccordé à un moteur à combustion interne comprenant des moyens de recirculation d'au moins une partie des gaz d'échappement, et le premier échangeur de chaleur est apte à coupler thermiquement le liquide caloporteur et l'air, le second échangeur de chaleur apte à coupler thermiquement le liquide caloporteur et les gaz d'échappement recirculés du moteur, le second échangeur étant disposé en aval du premier échangeur de sorte que le second est alimenté en liquide caloporteur provenant du premier.

D'autres particularités et avantages apparaîtront à la lecture de la description ci-après, faite en référence aux figures dans lesquelles
- la figure 1 représente une vue en coupe longitudinale et schématique d'un premier exemple de réalisation d'un clapet d'un dispositif selon l'invention,
- la figure 2 représente une vue de face du clapet selon la flèche S1 de la figure 1,
- la figure 3 représente une vue en coupe longitudinale et schématique d'un second exemple de réalisation d'un clapet d'un dispositif selon l'invention,
- la figure 4 représente une vue en coupe longitudinale et schématique d'un troisième exemple de réalisation d'un clapet d'un dispositif selon l'invention,
- la figure 5 représente une vue de face d'un détail du clapet de la figure 4, selon la flèche S1, illustrant des moyens de rappel,
- les figures 6 à 8 représentent trois des vues en coupe longitudinale et schématique d'un clapet du type de celui des figures 1 et 2, illustrant respectivement trois configurations de fonctionnement possibles pour les clapets des différents exemples de réalisation,
- la figure 9 représente un exemple de circuit hydraulique conforme à l'invention utilisant un clapet.

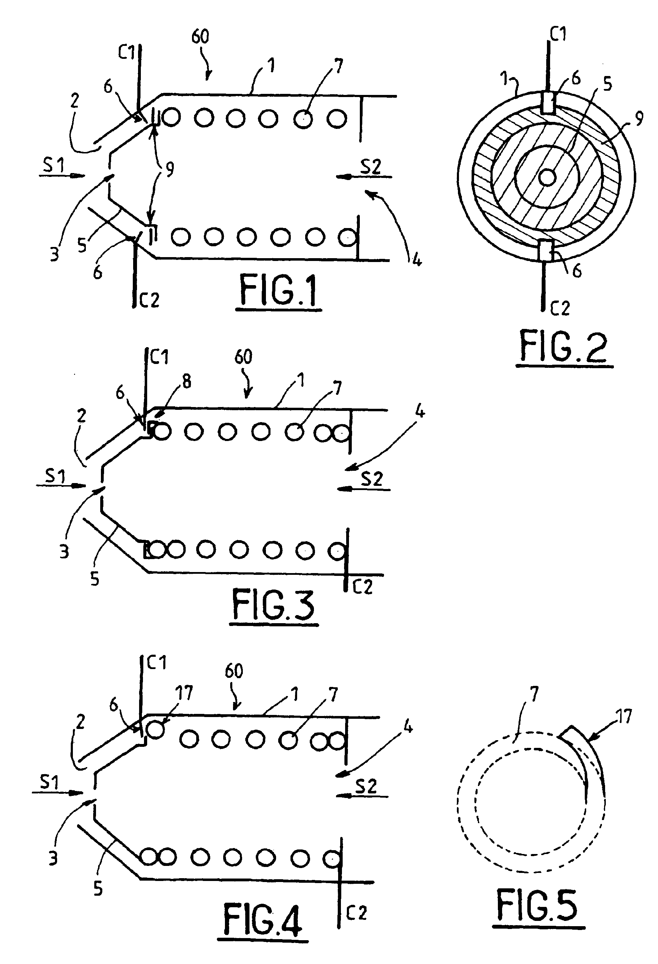

En se référant à l'exemple de réalisation de la figure 1, le clapet 60 comprend un corps 1 par exemple oblong et creux, de forme sensiblement tubulaire destiné à être traversé par un fluide. Les deux extrémités du corps 1 délimitent respectivement deux orifices 2, 4 ou ouvertures formant les entrées/sorties pour le fluide traversant le corps 1. Un élément 5 de régulation de débit est disposé de façon mobile à l'intérieur du corps 1. Plus précisément, élément 5 de régulation a une forme générale tronconique et est susceptible de se déplacer dans le corps 1 entre deux positions de travail correspondant respectivement à un état du clapet 60 dit "passant" et un état dit "résistif". Dans l'état passant du clapet 60, le fluide traverse librement le corps 1 dans un premier sens S1 avec un premier débit.

Dans l'état résistif, la partie conique de l'élément 5 de régulation est en appui sur le corps 1 et obstrue un premier 2 des orifices.

Comme il sera expliqué plus en détail ci-après, l'élément 5 de régulation peut comporter un orifice 3 prévu pour assurer un débit résiduel traversant le corps 1, même lorsque l'élément 5 de régulation obstrue le premier orifice 2 du corps 1.

Dans l'état passant, l'élément 5 de régulation ne siège pas sur le premier orifice 2 du corps 1 et permet ainsi la libre circulation du fluide à travers ce dernier.

De préférence, des moyens 7 de rappel sont prévus dans le corps 1 pour solliciter l'élément 5 de régulation de débit vers une de ses positions de travail. Par exemple, un ressort 7 de compression sollicite l'élément de régulation en direction du premier 2 orifice, de façon à boucher ce dernier (c'est-à dire que l'élément 5 de régulation est sollicité par le ressort 7 vers la gauche sur la figure 1). L'élément 5 de régulation de débit peut être déplacé dans le corps 1 en fonction de la pression et/ou du flux de fluide.

Le clapet 60 comprend des moyens de détection, par exemple électrique, de la position de l'élément 5 de régulation par rapport au corps 1. La position de l'élément 5 de régulation par rapport au corps 1 étant fonction de la pression et/ou du sens de circulation du fluide dans le clapet 60, l'invention permet ainsi déterminer le sens de circulation du fluide dans le clapet 60.

Les moyens de détection comportent un contact électrique comprenant une partie fixe 6 solidaire du corps 1 et une partie mobile 9 déplaçable avec l'élément 5 de régulation de débit.

Dans l'exemple de réalisation des figures 1 et 2, la partie fixe du contact comprend deux lames ou languettes 6 souples, solidaires du corps 1. Par exemple, les languettes 6 font saillie à l'intérieur du corps 1 selon une direction sensiblement perpendiculaire à l'axe longitudinal de ce dernier. Les deux languettes 6 sont par exemple disposées de façon diamétralement opposée par rapport à l'axe longitudinal du corps 1.

La partie mobile du contact peut comporter une piste 9 conductrice formée sur l'élément 5 de régulation de débit. Par exemple la base du tronc de cône formé par l'élément 5 de régulation peut former un rebord circulaire sur lequel est disposée la piste 9 conductrice.

Lorsque l'élément 5 de régulation obstrue le premier 2 orifice, les deux lames souples 6 sont en contact avec la piste 9. Les deux extrémités C1, C2 du contact sont alors reliées (contact fermé). En revanche, lorsque l'élément 5 de régulation ne siège pas sur le premier orifice 2, le contact C1, C2 est ouvert.

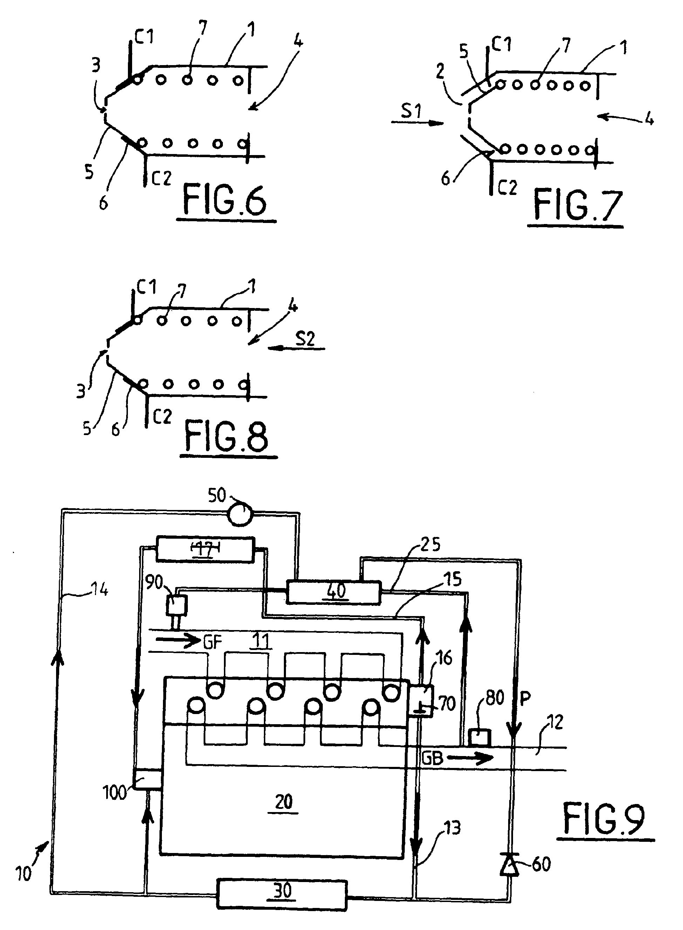

Un exemple de fonctionnement va à présent être décrit en référence aux figures 6 à 8.

Lorsqu'il n'y pas de débit de fluide (ou que le débit n'est pas significatif), le clapet 60 est dans sa position de repos (état résistif) dans laquelle l'élément 5 de régulation obstrue le premier orifice 2 sous l'action du ressort 7. Le contact C1, C2 est fermé (figure 6).

Lorsque le fluide circule débit dans un premier sens S1 (du premier orifice 2 vers le second 4 orifice) avec une pression supérieure au tarage du ressort 7, le fluide comprime le ressort 7 et décolle l'élément 5 de régulation du premier orifice 2 (état passant), et ainsi ouvre le contact C1, C2 (cf. figure 7).

Lorsque le fluide à un débit dans un second sens S2 (du second 4 orifice 2 vers le premier orifice), l'élément 5 de régulation est appuyé contre le premier orifice 2 (état résistif), et ainsi ferme le contact C1, C2.

L'invention permet ainsi de façon simple et peu coûteuse une détermination de l'état de circulation du fluide au sein du clapet 60. Lorsque cette information est associée à l'état de commande d'une pompe de mise en circulation du fluide dans un circuit, l'invention permet de détecter tout dysfonctionnement dans le circuit. Par exemple, si la pompe du circuit est active mais que le clapet reste en état résistif alors qu'il devrait être passant, il est possible de conclure que le circuit est endommagé. De la même façon, en cas de casse du ressort 7 du clapet 60, le signal du contact sera incohérent avec celui de l'état de la pompe et il sera possible de détecter une anomalie du clapet 60.

La figure 3 illustre une variante de réalisation. Les éléments identiques à ceux décrits ci-dessus sont désignés par les mêmes références numériques et ne sont pas décrits en détail une seconde fois. Le clapet 60 de la figure 3 se distingue de celui décrit précédemment uniquement en ce que le ressort 7 est conducteur de l'électricité, et en ce qu'il fait partie du contact C1, C2. Plus précisément, une extrémité C1 du contact comporte comme précédemment une languette souple 6 solidaire du corps 1. En vis-à-vis de la languette 6, l'élément 5 de régulation comprend sur sa périphérie un contacteur 8 double face apte à faire transiter le courant entre la languette souple 6 et l'extrémité mobile du ressort 7. L'extrémité fixe du ressort 7 est quant à elle en contact avec l'autre extrémité C2 du contact. Le fonctionnement du clapet 60 est identique à celui décrit auparavant en référence à l'exemple générique illustré aux figures 6 à 8.

La figure 4 illustre encore une autre variante de réalisation qui se différencie de celle de la figure 3 uniquement en ce que l'extrémité mobile du ressort 7 peut venir directement en contact avec la languette souple 6 solidaire du corps 1. C'est-à-dire que qu'un contacteur double face n'est pas nécessaire pour assurer le transit du courant. A cet effet, et comme représenté à la figure 5, la spire située à l'extrémité mobile 17 du ressort 7 peut être courbée vers l'extérieur du ressort 7 de façon à former une languette destinée à venir au contact de la languette 6 souple.

Le clapet 60 peut avantageusement être utilisé comme un clapet anti-retour pour un circuit hydraulique de refroidissement des gaz d'échappement recirculés.

Le circuit illustré à la figure 9 comprend un moteur 20 à combustion interne pourvu de conduits 11 d'admission délivrant des gaz frais GF dans les cylindres du moteur 20. Les gaz brûlés GB issus de la combustion dans les cylindres sont collectés par des conduits d'échappement 12. Une dérivation 25 permet de faire recirculer une fraction des gaz d'échappement au niveau de l'admission 11. La dérivation 25 comporte à cet effet une vanne 90 pilotée pour réguler le débit des gaz d'échappement recirculés.

Le moteur 20 comprend un circuit 10 de liquide caloporteur comportant une première branche 13 formant une boucle entre un boîtier de sortie d'eau 16 et une pompe 100, par exemple mécanique. La première boucle 13 contient un radiateur 30 assurant un échange thermique entre le liquide caloporteur et l'air. Le débit de liquide caloporteur admis à circuler dans la première branche 13 est commandé, par exemple, par un thermostat 70 situé dans le boîtier 16 de sortie d'eau.

Selon l'invention, le circuit de refroidissement 10 comprend une seconde boucle 14 raccordée en parallèle à la première boucle 13 au niveau respectivement des entrée et sortie du radiateur 30. La seconde boucle 14 comporte un échangeur 40 de chaleur couplant thermiquement le liquide caloporteur avec les gaz d'échappement recirculés circulant dans la dérivation 25. Une pompe 50, par exemple électrique, peut être prévue dans la seconde boucle 14.

Par ailleurs, des moyens 60 anti-retour sont prévus dans le circuit 10 pour empêcher la circulation directe du liquide caloporteur du moteur 20 vers l'échangeur 40 liquide caloporteur/gaz d'échappement recirculés. Les moyens 60 anti-retour sont constitués d'un clapet conforme à l'un quelconque des exemples de réalisation décrits ci-dessus et disposé, par exemple, dans la seconde boucle 14, en amont du radiateur 30.

Lorsque le moteur 20 est très chaud, le circuit 10 selon l'invention permet d'alimenter l'échangeur liquide caloporteur/gaz d'échappement recirculés avec du liquide refroidi par le radiateur 30.

Lorsque le thermostat 70 qui commande la circulation naturelle du liquide caloporteur dans le radiateur 30 est fermé, le liquide caloporteur qui circule dans l'échangeur 40 liquide caloporteur/gaz recirculés reste à une température proche de la température ambiante. De cette façon est assurée la réduction des polluants dans les gaz d'échappement du moteur (Nox notamment).

La pompe 50 électrique du second circuit 40 peut être mise en marche pour augmenter l'échange thermique entre le liquide caloporteur et les gaz d'échappement recirculés.

L'arrêt de cette pompe 50 électrique permet également de supprimer la circulation de liquide caloporteur dans l'échangeur 40 liquide/gaz recirculés dans la phase de démarrage du moteur, c'est-à-dire à un moment où le démarrage d'un système de catalyse n'est pas encore amorcé. Cette configuration permet de réduire les polluants du type notamment CO et HC et permet donc de supprimer les by-pass classiques sur le liquide caloporteur ou sur les gaz d'échappement.

L'arrêt de la pompe 50 située dans la seconde boucle 14 est particulièrement avantageux durant la phase de démarrage du moteur, lorsque qu'un catalyseur est placé sur la ligne d'échappement et que ce dernier n'est pas amorcé (c'est-à-dire lorsque la température des gaz d'échappement est inférieure à une température seuil comprise entre 100 et 250°C, en général 150°C environ). Des moyens 80 de mesure de la température des gaz d'échappement, tels qu'une sonde peuvent être prévus à cet effet au niveau de l'échappement.

De la même façon, lorsque la recirculation des gaz d'échappement est interrompue par la vanne 90 correspondante, la pompe 50 située dans la seconde boucle 14 n'est pas mise en marche. De préférence, la pompe 50 est mise à l'arrêt avec une temporisation déterminée après cet arrêt du recyclage. Ainsi, de préférence, la pompe 50 située dans la seconde boucle 14 n'est alimentée que lorsque les gaz d'échappement sont recirculés et que la température de ces derniers a atteint une valeur seuil (catalyseur amorcé).

Lorsque la configuration de fonctionnement du moteur nécessite un refroidissement simultané du moteur 20 et des gaz d'échappement recirculés, le thermostat 70 est ouvert et la pompe 50 située dans la seconde boucle est mise en marche. Le liquide caloporteur refroidit dans le radiateur 30 est partagé entre le moteur 20 et l'échangeur 40 liquide/gaz recirculés. De même, le radiateur 30 est alimenté par un mélange de liquide provenant du moteur 20 et de l'échangeur liquide/gaz d'échappement recirculés.

Le thermostat 70 et la pompe 50 de la seconde boucle peuvent ainsi réguler finement les débits de liquide caloporteur dans les deux boucles 13, 14 et ainsi les échanges.

Lorsque la pompe 50 est active et que le thermostat 70 est ouvert, le sens de circulation du liquide dans la seconde boucle (et donc dans le clapet 60) est fonction du régime moteur. En effet, à faible régime (inférieur par exemple à 3000tr./min), le fluide circule dans le sens passant du clapet (flèche P). Aux régimes moteur plus élevés, la pression du fluide à l'entrée du radiateur 30 est supérieure à la pression du fluide à la sortie du radiateur 30. De ce fait, le liquide circule dans la seconde boucle 14 dans le sens résistif du clapet (sens inverse à celui de la flèche P).

Lorsque la pompe 50 est active et que le thermostat 70 est fermé, le fluide circule dans la seconde boucle 14 dans le sens passant (flèche P).

Lorsque la pompe 50 n'est pas activée et que le thermostat 70 est ouvert, le fluide circule dans la seconde boucle 14 dans le sens résistif (sens inverse à celui de la flèche P).

Enfin, lorsque la pompe 50 n'est pas activée et que le thermostat 70 est fermé, il n'y a en principe pas de circulation de fluide dans la seconde boucle 14 (clapet par défaut en état résistif).

Ainsi, en comparant l'état réel détecté du clapet 60 avec l'état théorique qui correspond à la situation de fonctionnement du circuit hydraulique, il est possible de détecter une anomalie dans le circuit.

Par exemple, si la pompe 50 est active et que le clapet 60 reste dans son état résistif alors qu'il devrait être passant, cela peut signifier que le circuit hydraulique est endommagé.

Le clapet 60 permet ainsi d'assurer en plus de sa fonction hydraulique, une fonction de détection de défaut qui a une grande importance pour la sécurité de fonctionnement du circuit.

## Revendications

1. Dispositif de régulation hydraulique comprenant un circuit (10) de liquide caloporteur comportant au moins deux échangeurs de chaleur (30, 40),et comportant, disposé entre les deux échangeurs (30,40), un clapet (60) comprenant un corps (1) destiné à être traversé par un fluide, deux orifices (2, 4) formant les entrées/sorties pour le fluide traversant le corps (1), un élément (5) de régulation de débit mobile par rapport au corps (1) entre deux positions de travail correspondant respectivement à un état du clapet (60) dit "passant", dans lequel le fluide traverse le corps (1) dans un premier sens (S1) avec un premier débit et un second état du clapet dit "résistif" dans lequel le fluide n'est pas admis à traverser le corps (1) ou le traverse avec un second débit, **caractérisé en ce que** le clapet comprend des moyens (6, C1, C2, 7) de détection de la position de l'élément (5) de régulation par rapport au corps (1), de façon à déterminer le sens de circulation du fluide dans le clapet (60).

2. Dispositif selon la revendication 1 , **caractérisé en ce que** l'élément (5) de régulation de débit est déplaçable par rapport au corps (1) sous l'effet de la pression et/ou du flux de fluide.

3. Dispositif selon la revendication 1 ou 2, **caractérisé en ce que** les moyens (6, C1, C2, 7) de détection comportent des moyens électriques.

4. Dispositif selon l'une quelconque des revendications précédentes, **caractérisé en ce que** les moyens (6, C1, C2, 7) de détection comportent un contact électrique comprenant une partie fixe (6) solidaire du corps (1) et une partie mobile (7, 8, 9, 17) déplaçable avec l'élément (5) de régulation de débit.

5. Dispositif selon la revendication 4, **caractérisé en ce que** le contact électrique comporte une pièce (6) conductrice déformable solidaire du corps (1) ou de l'élément (5) de régulation de débit.

6. Dispositif selon l'une quelconque des revendications précédentes, **caractérisé en ce que** le clapet comporte des moyens (7) de rappel sollicitant l'élément (5) de régulation de débit vers une des positions de travail.

7. Dispositif selon la revendication 6, **caractérisé en ce que** les moyens (7) de rappel sont au moins partiellement conducteurs de l'électricité, et **en ce que** les moyens (6, C1, C2, 7) de détection comportent un contact électrique apte à transiter par les moyens (7) de rappel.

8. Dispositif selon l'une quelconque des revendications précédentes, **caractérisé en ce que** l'élément (5) de régulation de débit et le corps (1) ont des forme conjuguées de façon que, dans l'état résistif, l'élément (5) de régulation obstrue au moins partiellement un des orifices (2, 4).

9. Dispositif selon l'une quelconque des revendications précédentes, **caractérisé en ce que** l'élément (5) de régulation comporte un orifice de fuite (3) prévu pour assurer un débit traversant le corps (1) quelle que soit la position de l'élément (5) de régulation.

10. Dispositif de régulation hydraulique selon l'une quelconque des revendications précédentes, **caractérisé en ce que** le premier échangeur (30) est disposé dans une première boucle (13) de circulation du liquide caloporteur, le second échangeur (40) étant situé dans une seconde boucle (14) raccordée à la première boucle (13).

11. Dispositif de régulation hydraulique selon l'une quelconque des revendications précédentes, **caractérisé en ce que** le circuit (10) de liquide caloporteur est raccordé à un moteur (20) à combustion interne comprenant des moyens de recirculation d'au moins une partie des gaz d'échappement, **et en ce que** le premier échangeur (30) est apte à coupler thermiquement le liquide caloporteur et l'air, le second échangeur de chaleur (40) est apte à coupler thermiquement le liquide caloporteur et les gaz d'échappement recirculés du moteur, le second échangeur (40) étant disposé en aval du premier échangeur (30) de sorte que le second échangeur (40) est alimenté en liquide caloporteur provenant du premier échangeur (30).

## Claims

1. Hydraulic regulation device including a coolant liquid circuit (10) comprising at least two heat exchangers (30, 40), and comprising, positioned between the two exchangers (30, 40), a valve (60) including a body (1) intended to have a fluid pass through it, two openings (2, 4) forming the inlets/outlets for the fluid passing through the body (1), a flow regulation element (5) that is mobile with respect to the body (1) between two working positions corresponding respectively to what is known as a "conducting" state of the valve (60), in which the fluid passes through the body (1) in a first direction (S1) at a first flow rate and a second state of the valve known as "resistive" in which the fluid is not allowed to pass through the body (1) or passes through it at a second flow rate, **characterised in that** the valve includes means (6, C1, C2, 7) for detecting the position of the regulation element (5) with respect to the body (1), in order to determine the direction of fluid circulation in the valve (60).

2. Device according to Claim 1, **characterised in that** the flow regulation element (5) is displaceable with respect to the body (1) under the effect of the pressure and/or the flow of fluid.

3. Device according to Claim 1 or 2, **characterised in that** the detection means (6, C1, C2, 7) comprise electric means.

4. Device according to any one of the preceding claims, **characterised in that** the detection means (6, C1, C2, 7) comprise an electrical contact including a fixed part (6) integral with the body (1) and a movable part (7, 8, 9, 17) displaceable with the flow regulation element (5).

5. Device according to Claim 4, **characterised in that** the electrical contact comprises a deformable conducting part (6) integral with the body (1) or the flow regulation element (5).

6. Device according to any one of the preceding claims, **characterised in that** the valve comprises return means (7) acting on the flow regulation element (5) in the direction of one of the working positions.

7. Device according to Claim 6, **characterised in that** the return means (7) are at least partly electrical conductors, and **in that** the detection means (6, C1, C2, 7) comprise an electrical contact capable of being passed through by the return means (7).

8. Device according to any one of the preceding claims, **characterised in that** the flow regulation element (5) and the body (1) have matching shapes so that, in the resistive state, the regulation element (5) at least partly blocks one of the openings (2, 4).

9. Device according to any one of the preceding claims, **characterised in that** the regulation element (5) comprises a drain hole (3) provided to ensure that a flow passes through the body (1) whatever the position of the regulation element (5).

10. Hydraulic regulation device according to any one of the preceding claims, **characterised in that** the first exchanger (30) is positioned in a first coolant liquid circulation loop (13), the second exchanger (40) being located in a second loop (14) connected to the first loop (13).

11. Hydraulic regulation device according to any one of the preceding claims, **characterised in that** the coolant liquid circuit (10) is connected to an internal combustion engine (20) including means for recirculating at least part of the exhaust fumes, **and in that** the first exchanger (30) is capable of thermally coupling the coolant liquid and the air, the second heat exchanger (40) is capable of thermally coupling the coolant liquid and the exhaust fumes recirculated from the engine, the second exchanger (40) being positioned downstream from the first exchanger (10) so that the second exchanger (40) is supplied with coolant liquid coming from the first exchanger (30).

## Patentansprüche

1. Vorrichtung zur hydraulischen Regelung, die einen Kreis (10) für Wärmeübertragungs-Flüssigkeit mit mindestens zwei Wärmetauschern (30, 40) und mit einem Ventil (60) zwischen den beiden Wärmetauschern (30, 40) aufweist, wobei das Ventil einen Körper (1), der von einem Fluid durchlaufen wird, zwei Öffnungen (2, 4), die die Eingänge/Ausgänge für das den Körper (1) durchlaufende Fluide bilden, und ein Element (5) zur Regelung des Durchsatzes umfasst, das gegenüber dem Körper (1) zwischen zwei Arbeitapositionen beweglich ist, die einem sogenannten durchlässigen Zustand des Ventils (60), in dem das Fluid den Körper (1) in einer ersten Richtung (S1) mit einem ersten Durchsatz durchläuft, und einem zweiten sogenannten resistiven Zustand des Ventils entsprechen, bei dem das Fluid nicht durch den Körper (1) gelassen wird oder ihn mit einem zweiten Durchsatz durchläuft, **dadurch gekennzeichnet, dass** das Ventil Mittel (6, C1, C2, 7) zum Erfassen der Position des Regelelements (5) in Bezug auf den Körper (1) aufweist, um die Umlaufrichtung des Fluids im ventil (60) zu bestimmen.

2. Vorrichtung nach Anspruch 1, **dadurch gekennzeichnet, dass** das Regelelement (5) gegenüber dem Körper (1) unter der Wirkung des Drucks und/oder des Flusses des Fluids verschiebbar ist.

3. Vorrichtung nach Anspruch 1 oder 2, **dadurch gekennzeichnet, dass** die Erfassungsmittel (6, C1, C2, 7) elektrische Mittel umfassen.

4. Vorrichtung nach einem der vorhergehenden Ansprüche, **dadurch gekennzeichnet, dass** die Erfassungsmittel (6, C1, C2, 7) einen elektrischen Kontakt, mit einem festen. Abschnitt (6), der mit dem Körper (1) fest verbunden ist, und einem beweglichen Abschnitt (7, 8, 9, 17) aufweisen, der mit dem Element (5) zur Regelung des Durchsatzes verschiebbar ist.

5. Vorrichtung nach Anspruch 4, **dadurch gekennzeichnet, dass** der elektrische Kontakt, ein mit dem Körper (1) oder dem Element (5) zur Regelung des Durchsatzes fest verbundenes verformbares leitfähiges Teil (6) aufweist.

6. Vorrichtung nach einem der vorhergehenden Ansprüche, **dadurch gekennzeichnet, dass** sie Rückstellmittel (7) aufweist, die das Element (5) zur Regelung des Durchsatzes in eine der Arbeitspositionen drücken.

7. Vorrichtung nach Anspruch 6, **dadurch gekennzeichnet, dass** die Rückstellmittel (7) zumindest teilweise elektrisch leitend sind und dass die Erfassungsmittel (6, C1, C2, 7) einen elektrischen Kontakt aufweisen, der durch die Rückstellmittel (7) hindurchlauffen kann

8. Vorrichtung nach einem der vorhergehenden Ansprüche, **dadurch gekennzeichnet dass** das Element (5) zur Regelung des Durchsatzes und der Körper (1) aufeinander abgestimmte Formen besitzen, sodass das Regelelement (5) im resistiven Zustand eine der Öffnungen (2, 4) zumindest teilweise versperrt.

9. Vorrichtung nach einem der vorhergehenden Ansprüche, **dadurch gekennzeichnet, dass** das Regelelement (5) eine Lecköffnung (3) aufweist, um für einen Durchsatz, durch den Körper (1) unabhängig von der Position des Regelelements (5) zu sorgen,

10. Vorrichtung zur hydraulischen Regelung nach einem der vorhergehenden Ansprüche, **dadurch gekennzeichnet, dass** der erste Wärmetauscher (30) in einer ersten Umlaufschleife (13) der Wärmeübertragungs-Flüssigkeit und der zweite Wärmetauscher (40) in einer zweiten, mit der ersten Schleife (13) verbundenen Schleife (14) angeordnet ist.

11. Vorrichtung zur hydraulischen Regelung nach einem der vorhergehenden Ansprüche, **dadurch gekennzeichnet, dass** der Kreis (10) für Wärmeühertragungs-Flüssigkeit mit einem Verbrennungsmotor (20) verbunden ist, der Mittel zur Rückführung zumindest eines Teils der Abgase aufweist, und **dadurch**, dass der erste Wärmetauscher (30) die Wärmeübertragungs-Flüssigkeit und die Luft und der zweite Wärmetauscher (40) die Wärmeübertragungs-Flüssigkeit und die rückgeführten Abgase des Motors thermisch koppeln, kann, wobei der zweite Wärmetauscher (40) vor dem ersten Wärmetauscher (30) angeordnet ist, sodass der zweite Wärmetauscher (40) mit Wärmeübertragungs-Flüssigkeit vom ersten Wärmetauscher (30) versorgt wird.
